**Europäisches Patentamt**

(19) **European Patent Office**

**Office européen des brevets**

(11) Veröffentlichungsnummer: **0 071 832**
**B1**

(12) # EUROPÄISCHE PATENTSCHRIFT

(45) Veröffentlichungstag der Patentschrift:
26.02.86

(51) Int. Cl.⁴: **A 01 K 5/01**

(21) Anmeldenummer: **82106625.5**

(22) Anmeldetag: **22.07.82**

(54) **Futtertrogeinrichtung.**

(30) Priorität: **03.08.81 DE 3130678**

(43) Veröffentlichungstag der Anmeldung:
**16.02.83 Patentblatt 83/7**

(45) Bekanntmachung des Hinweises auf die Patenterteilung:
**26.02.86 Patentblatt 86/9**

(84) Benannte Vertragsstaaten:
**AT CH FR LI NL**

(56) Entgegenhaltungen:
**CH - A - 555 634**
**DE - A - 2 706 802**
**FR - A - 2 401 608**

**LANDBOUWMECHANISATIE, Band 33, Nr. 7, Juli 1982, Deventer, NL.**

(73) Patentinhaber: **Hacker, Josef, Schulstrasse 7, D-8254 Mittbach (DE)**

(72) Erfinder: **Hacker, Josef, Schulstrasse 7, D-8254 Mittbach (DE)**

(74) Vertreter: **Wächtershäuser, Günter, Dr., Tal 29, D-8000 München 2 (DE)**

**Beschreibung**

Die Erfindung betrifft eine Futtertrogeinrichtung mit einer Vielzahl von in Reihenanordnung
einbetonierbaren vorgefertigten Futterschalenbauteilen und mit einer flexiblen hinteren
Futterbremse, die mit einer Vielzahl von
Befestigungsorganen befestigbar ist. Eine solche
Futtertrogeinrichtung ist bereits bekannt. Dabei
werden die vorgefertigten Futterschalenbauteile
in Ortbeton verlegt und die Befestigungsorgane
werden gesondert in das Ortbetonfundament
eingesetzt. Dabei bereitet die präzise Positionierung der Befestigungsorgane erhebliche Schwierigkeiten, so daß häufig Abweichungen sowohl
hinsichtlich der Abstände der Befestigungsorgane als auch hinsichtlich der Höhe der
Befestigungsorgane auftreten. Wenn man vorgefertigte Futterbremsen mit vorgebohrten
Öffnungen für die Befestigungsorgane sowie
vorgefertigte Flacheisen für das Anpressen der
Futterbremsen verwendet, so machen sich diese
Abweichungen der Positionen der Befestigungsorgane äußerst störend bemerkbar. Alternativ
kann man die Futterbremse an Ort und Stelle
entsprechend den Positionen der Befestigungsorgane bohren. Dies ist ein äußerst aufwendiges
Verfahren. Außerdem besteht bei den bekannten
Futtertrögen mit Futterbremse ein relativ großer
vertikaler Abstand zwischen dem eigentlichen
Befestigungsorgan und dem oberen Rand der
Fläche des Futterschalenbauteils, an der die
Futterbremse anliegt. Selbst wenn das zum
Andrücken der Futterbremse verwendete
Flacheisen relativ weit nach oben ragt, nimmt
dennoch die Andruckkraft von der Position des
Befestigungsorgans nach oben hin allmählich ab,
so daß insbesondere bei längerem Gebrauch die
Futterbremse abgebogen werden kann und
Futterteile in den Spalt zwischen Futterbremse
und Futterschalenbauteil gelangen können.

Es ist somit Aufgabe der vorliegenden Erfindung, die Futtertrogeinrichtung der eingangs
genannten Art derart zu verbessern, daß der
Vorgang der Befestigung der Futterbremse
wesentlich vereinfacht werden kann und dennoch
eine bessere Verbindung zwischen Futterbremse
und den Futterschalenbauteilen erreicht werden
kann.

Diese Aufgabe wird durch die Futtertrogeinrichtung gemäß dem Hauptanspruch gelöst.

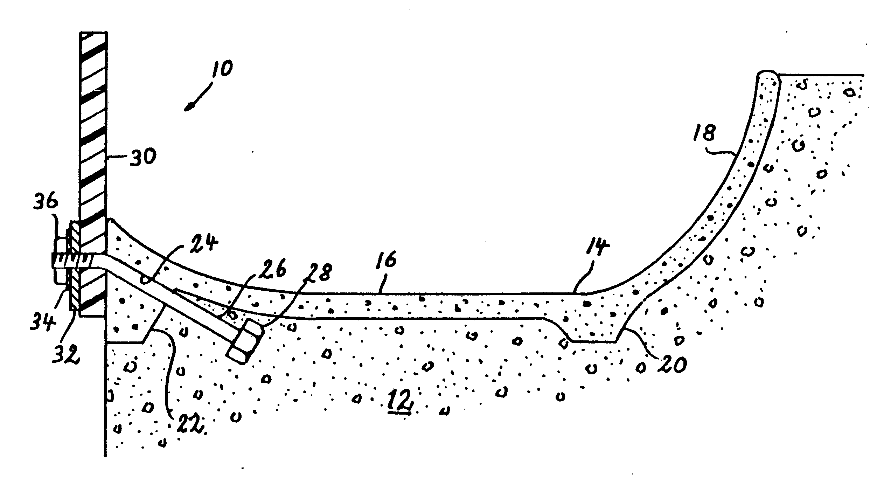

Im folgenden wird die Erfindung anhand einer
Figur näher erläutert. Diese zeigt einen Querschnitt durch eine einbetonierte und fertigmontierte Futterkrippe 10, welche in ein Bett 12
aus Ortbeton einbetoniert ist. Die Futterkrippe 10
umfaßt eine Vielzahl von nebeneinander
verlegten Futterschalen 14, von denen in der
Figur nur eine im Schnitt dargestellt ist. Alle
Futterschalen haben die gleiche Querschnittsgestalt. Die Fugen zwischen den Futterschalen
sind mit einem säurebeständigen Fugenmörtel
gefüllt. Die Futterschale 14 umfaßt ein Bodenteil
16 und eine vorzugsweise gekrümmte vordere
Wand 18 sowie eine vordere Sockelleiste 20. Die vordere Sockelleiste kann auch entfallen. Die
vordere Wand 18 muß nicht gekrümmt sein. Sie
kann vielmehr geradlinig aufsteigen und zwar
entweder senkrecht oder in einem Winkel. An den
oberen Rand der vorderen Wand 18 kann sich
eine Fliese anschließen. Die vordere Wand 18 ist
bei der in der Figur gezeigten Ausführungsform
einstückig mit dem Bodenteil 16 ausgebildet. Sie
kann jedoch auch gesondert verlegt werden. Bei
letzterer Ausführungsform hat die Futterschale
ein mehr oder weniger breites Bodenteil.
Derartige Futterschalen sind insbesondere für
einen nachträglichen Umbau geeignet. In diesem
Falle wird der hintere Teil eines bestehenden
Futtertrogs entfernt und durch die Erfindungsgemäße Futtertrogeinrichtung ersetzt. Diese Bauweise ist wesentlich preisgünstiger als eine vollständige Neuerrichtung der Futterkrippe.

Im hinteren Bereich ist das Bodenteil 16 mit
einer Krümmung versehen und einstückig mit
einer hinteren Sockel- und Befestigungsleiste 22
verbunden. Die hintere Wand der hinteren
Sockelleiste 22 fluchtet mit der hinteren Wand des
Ortbetonbetts 12.

Die hintere Sockelleiste 22 der Futterschale 14
weist mehrere zylindrische Ausnehmungen auf,
durch welche sich jeweils eine Befestigungsschraube 26 erstreckt. Die Ausnehmungen 24 sind
in bestimmten Abständen über die gesamte
Länge der Futterschale 14 verteilt angeordnet.
Vorzugsweise ist die Anordnung dabei so
gewählt, daß sämtliche Ausnehmungen eines aus
einer Vielzahl von Futterschalen 14 bestehenden
Futtertrogs gleichen Abstand voneinander haben.
Alternativ können jedoch auch wechselnde
Abstände vorgesehen sein, solange hinsichtlich
der an den Futterschalen 14 zu befestigten Bauteilen entsprechende Vorkehrungen getroffen
sind.

Beim Bau einer Futterkrippe wird zunächst das
Bett 12 mit Hilfe einer Schalung aus Ortbeton
errichtet und die Futterschalen 14 werden in den
noch weichen Ortbeton gedrückt und mit einer
bestimmten Fugenweite nebeneinander verlegt.
Zuvor werden die Befestigungsschrauben 26 in
die Ausnehmungen 24 eingeführt. Daher werden
auch die hinteren Enden der Befestigungsschrauben 26 in den weichen Ortbeton eingedrückt. Die Befestigungsschrauben haben nun
einen Abstand voneinander, welcher präzise dem
Abstand der Ausnehmungen 24 entspricht.
Sodann läßt man das Bett 12 aushärten. Nun sind
nicht nur die Futterschalen 14 mit dem Ortbetonbett 12 fest verbunden, sondern auch sämtliche
Befestigungsschrauben 26 sind fest im Ortbetonbett 14 verankert. Sodann werden die
vorstehenden Enden der Befestigungsschrauben
26 abwärts gebogen, bis sie etwa horizontal
ausgerichtet sind.

Bei der bisher beschriebenen Ausführungsform
ragt ein hinteres freies Ende der Befestigungsschrauben 26 über die vordere schräge Wand der
hinteren Sockelleiste 22 hinaus in das Ortbetonbett 12. Alternativ kann jedoch der Kopf 28 der Befestigungsschraube 26 auch an der hinteren Sockelleiste 22 anliegen. Es ist ferner möglich, an der unteren Seite des Bodenteils 16 eine zusätzliche Längsrippe vorzusehen, an der die Köpfe der Befestigungsschrauben 26 zur Anlage kommen. Man kann so auf einfache Weise erreichen, daß sämtliche Befestigungsschrauben 26 eine definierte Anordnung haben. Bei einer weiteren bevorzugten Ausführungsform können die Befestigungsschrauben 26 bereits beim Gießen der Futterschalen 14 fest eingegossen werden. Die Befestigungsschrauben 26 können bereits vor dem Eingießen in die Futterschalen 14 bzw. vor dem Einsetzen in die Ausnehmungen 24 der Futterschalen 14 gebogen werden oder nach dem Eingießen in die Futterschalen 14 oder nach Einbetonieren in das Ortbetonbett 12. Falls eine schon gebogene Befestigungsschraube in die Ausnehmungen der schon gegossenen Futterschalen 14 eingeführt werden soll, müssen die Ausnehmungen selbstverständlich eine Weite aufweisen, welche die Einführung einer gekrümmten Befestigungsschraube gestattet. Auch zur Erleichterung des nachträglichen Biegevorgangs können die hinteren Bereiche der Ausnehmungen entsprechend erweitert sein und die Krümmung des Erweiterungsbereichs kann der gewünschten Krümmung der gebogenen Befestigungsschraube 26 angepaßt sein. Anstelle einer zylindrischen Ausnehmung 24 kann jede andere Ausnehmung vorgesehen sein, solange nur sichergestellt ist, daß durch die Anordnung der Ausnehmungen eine präzise Positionierung der Befestigungsschrauben vorgegeben ist. Insbesondere können die Ausnehmungen 24 auch als Schlitze vorgesehen sein, welche sich von der unteren Fläche der hinteren Sockelleiste nach oben erstrecken. Bei der bisher beschriebenen Ausführungsform werden die Befestigungsschrauben allesamt von unten her in die Ausnehmungen eingeführt. Es ist jedoch auch möglich, die Befestigungsschrauben von oben her in entsprechende Ausnehmungen einzuführen. In diesem Fall kann der hintere Bereich des Bodenteils 16 der Futterschale 14 wesentlich dicker ausgeführt sein. Es ist dabei lediglich erforderlich, die von oben her zugängliche Ausnehmung für das Einführen der Befestigungsschraube nach der Einführung der Befestigungsschraube mit einem säurefesten Beton zu füllen. Alternativ kann die von oben her zugängliche Ausnehmung für Einführung der Befestigungsschraube sich auch durch den gesamten Querschnitt des Bodenteils 16 bis zum Ortbetonbett 12 erstrecken. Bei den bisher beschriebenen Ausführungsformen sind die Befestigungsschrauben 26 an der Futterschale 14 verankert sowie über den Kopf 28 im Ortbetonbett 12.

Zur zusätzlichen Verankerung im Ortbetonbett können am Kopf 28 Pratzen angeschweißt sein. In jedem Falle wird die Futterschale 14 als vorgefertigtes Bauteil verwendet und die Ausbildung der Futterschale und insbesondere die Anordnung der Ausnehmungen 24 legt den gesamten übrigen Aufbau der Futtertrogeinrichtung und insbesondere die Montagevorgänge fest. Dies soll im folgenden näher erläutert werden.

Nach dem Erhärten des Ortbetonbetts 12 wird eine Futterbremse 30 aus einem weichen nachgiebigen Material mit Hilfe der horizontal vorstehenden Enden der Befestigungsschrauben 26 befestigt. Die Futterbremse 30 besteht vorzugsweise aus Gummi oder auch aus einem anderen natürlichen oder synthetischen elastischen Material. Sie kann die in der Figur dargestellte rechteckige Querschnittsgestalt oder jede andere Querschnittsgestalt aufweisen, solange nur das Herausfallen des Futters aus dem Trog verhindert wird und eine Verletzung der Kühe verhindert wird. Für die gesammte Futterkrippe kann eine sich über die gesamte Länge sämtlicher Futterschalen erstreckende einstückige Futterbremse, z.B. in Form einer Gummiplatte vorgesehen sein. Die Futterbremse kann jedoch auch aus mehreren einzelnen Abschnitten bestehen. Jeder Futterschale kann ein gesonderter Abschnitt der Futterbremse zugeordnet sein, oder mehreren (z.B. 5 oder 10) Futterschalen kann jeweils ein Futterbremsenabschnitt zugeordnet sein. Die Futterbremse 30 weist Bohrungen auf, deren Anordnung der vorbestimmten Anordnung der Befestigungsschrauben 26 entspricht. Bei einer bevorzugten Ausführungsform sind die Abstände der Bohrungen der Futterbremse jedoch nicht gleich den Abständen der Befestigungsschrauben 26. Sie sind vielmehr kleiner und die Futterbremse 30 wird während der Montage in Längsrichtung gedehnt. Hierdurch wird ein schlaffer Zustand der Futterbremse 30 vermieden.

Nach dem Aufschieben der Futterbremse 30 unter Dehnung auf die vorstehenden Enden der Befestigungsschrauben 26 wird ein vorgebohrtes Flacheisen 32 auf die vorstehenden Enden der Befestigungsschrauben 26 aufgeschoben. Das Flacheisen weist Langlöcher auf, welche die Montage erleichtern. Die Breite des Flacheisens 32 ist derart gewählt, daß sein oberer Rand etwa mit dem oberen hinteren Rand der Futterschale 14 koinzidiert. Der obere Rand des Flacheisens 32 kann jedoch auch je nach der Dicke der Futterbremse 30 etwas tiefer liegen. Auf jeden Fall sollte die Lage des oberen Randes des Flacheisens 32 derart gewählt sein, daß die Futterbremse 30 nicht derart stark rückwärts gebogen werden kann, daß Futter in einen sodann entstehenden Spalt zwischen Futterbremse 30 und Futterschale 14 eindringen kann. Voraussetzung für diesen Effekt ist natürlich eine möglichst hohe Anordnung der Befestigungsschrauben 26. Der allgemein schräge Verlauf der Befestigungsschrauben 26 mit in horizontaler Richtung abgebogenem Schraubenende wirkt sich in dieser Hinsicht besonders günstig aus, da hierdurch die Befestigungskräfte möglichst weit oben an der Futterbremse angreifen. Auf die freien Enden der Befestigungsschrauben sind noch Zwischenlegscheiben 34 aufgeschoben. Schließlich sind auf die freien Gewindebereiche der Befestigungsschrauben Befestigungsmuttern 36 aufgeschraubt. Hierdurch wird die bereits unter einer Längszugspannung stehende Futterbremse 30 zusätzlich mit einer Druckspannung in Querrichtung beaufschlagt und es kommt eine feste Verbindung zwischen Futterbremse 30 und Futterschalen 14 zustande.

Die Errichtung der Futterkrippe ist äußerst vereinfacht, da schon durch die Ausbildung der vorgefertigten Futterschalen 14 sämtliche für die Montage relevanten Abmessungen vorgegeben sind. Selbstverständlich kann auch die Futterbremse 30 mit vorgefertigten Bohrungen versehen sein und auch das Flacheisen kann vorgefertigte Langlochbohrungen aufweisen. Sofern die Futterbremse 30 aus einzelnen Abschnitten besteht, können diese am oberen Rand mit Hilfe von Blechlaschen oder dergleichen miteinander verbunden werden oder sie können auch miteinander verklebt werden. Auch das Flacheisen 32 kann aus einzelnen Abschnitten bestehen. Dabei kann die Trennung der Flacheisen jeweils im Bereich einer Langlochbohrung vorgesehen sein. Die Zwischenlegscheiben 34 können über den oberen und unteren Rand des Flacheisens greifen und auf diese Weise eine Relativverschiebung der beiden Flacheisenabschnitte gegeneinander und in vertikaler Richtung verhindern. Alternativ können die beiden aneinander anstoßenden Flacheisenabschnitte auch einerseits konkav und andererseits konvex ausgebildet sein, so daß eine Relativverschiebung in vertikaler Richtung durch diese formschlüssige Verbindung verhindert wird. Ferner können die Flacheisenabschnitte im Endbereich auch abgestuft ausgebildet sein und einander überlappen, so daß die überlappenden Bereiche durch die Schraubverbindung aneinander befestigt werden. Die eventuell über die Befestigungsmuttern 36 vorstehenden freien Enden der Befestigungsschrauben 26 werden entfernt.

Bisher wurden als Befestigungsorgane ausschließlich Befestigungsschrauben und Befestigungsmuttern erwähnt, wobei die Muttern von außen auf die Befestigungsschrauben aufgeschraubt werden. Es ist jedoch auch möglich, Befestigungsorgane mit Innengewinde entweder in die Futterschalen einzugießen oder in entsprechende Ausnehmungen in den Futterschalen derart einzusetzen, daß sie zum Teil in das Ortbeton ragen. In diesem Falle können die Befestigungsschrauben von außen her in die Befestigungsmuttern eingeschraubt werden. Alternativ können auch dübelartige Spreizvorrichtungen entweder in die Futterschalen eingegossen werden oder in entsprechende Ausnehmungen der Futterschalen eingesetzt werden, derart, daß sie in das Ortbetonbett ragen. Sodann können schneidende Schrauben in die dübelartigen Spreizhalterungen von außen eingeschraubt werden. Anstelle von Schrauben können auch verschiedenste andere Befestigungsorgane, insbesondere Schnappbefestigungsorgane Verwendung finden, solange nur durch die Ausbildung der Ausnehmungen in den Futterschalen die Befestigungspositionen eindeutig festgelegt sind.

Die Verwendung von Befestigungsschrauben und Muttern hat den Vorteil, daß die Futterbremse ohne Mühe öfters ausgewechselt werden kann.

**Patentansprüche**

1. Futtertrogeinrichtung mit einer Vielzahl von in Reihenanordnung verlegbaren vorgefertigten Futterschalenbauteilen (14) und mit einer flexiblen hinteren Futterbremse (30, die mit einer Vielzahl von Befestigungsorganen (26) befestigbar ist, dadurch gekennzeichnet, daß die vorgefertigten Futterschalenbauteile (14) jeweils mehrere Befestigungsorgane (26) oder mehrere Ausnehmungen (24) für die Aufnahme der Befestigungsorgane (26) aufweisen.

2. Futtertrogeinrichtung nach Anspruch 1, dadurch gekennzeichnet, daß die Befestigungsorgane (26) mit einem hinteren freien Ende in ein Ortbetonbett (12) für die Futterschalen (16) hineinragen wird mit einem vorderen Gewindebereich aus den Futterschalen (16) herausragen.

3. Futtertrogeinrichtung nach Anspruch 2, dadurch gekennzeichnet, daß die hinteren Bereiche der Befestigungsorgane (26) schräg nach unten in das Ortbetonbett (12) hineinragen, während die vorderen Gewindebereiche in horizontaler Richtung aus den Futterschalen (16) herausragen.

4. Futtertrogeinrichtung nach einem der Ansprüche 1 bis 3, dadurch gekennzeichnet, daß die Befestigungsorgane (26) in die Futterschalen (16) eingegossen sind.

5. Futtertrogeinrichtung nach einem der Ansprüche 1 bis 4, dadurch gekennzeichnet, daß die Futterbremse (30) durch die Befestigungsorgane (26) zwischen den Futterschalen (16) und einem Flacheisen (32) eingespannt ist und daß die Abstände der Befestigungsorgane (26) oder der Ausnehmungen (24) für die Befestigungsorgane (26) der Futterschalenbauteile (16) den Abständen vorgebohrter Durchgänge der Futterbremse (30) sowie den Abständen vorgebohrter Durchgänge im Flacheisen (32) entsprechen.

6. Futtertrogeinrichtung nach Anspruch 5, dadurch gekennzeichnet, daß die Position des oberen Randes des Flacheisens (32) etwa der Position des oberen Randes des zugeordneten Bereichs des Futterschalenbauteils (16) entspricht.

7. Verfahren zur Herstellung eines Futtertrogs, beidem vorgefertigte Futterschalenbauteile (14) in ein Ortbeton bett (12) verlegt werden, dadurch gekennzeichnet, daß man vorgefertigte Futterschalenbauteile (14) verlegt, in deren hinterem Randbereich Befestigungsorgane (26) für die Befestigung einer Futterbremse (30) oder Ausnehmungen für die Aufnahme dieser Befestigungsorgane (26) vorgesehen sind.

8. Verfahren nach Anspruch 7, dadurch gekennzeichnet, daß die hinteren Enden der Befestigungsorgane (26) beim Verlegen der Futterschalenbauteile (14) in das Ortbetonbett (12) eingebettet werden.

9. Verfahren nach einem der Ansprüche 7 oder 8, dadurch gekennzeichnet, daß man als Befestigungsorgan Befestigungsschrauben (26) verwendet, welche mit einer Neigung gegen die horizontale Ebene ausgerichtet werden und daß die freien Gewindebereiche derselben nach dem Verlegen der Futterschalenbauteile (14) in die horizontale Richtung abgebogen werden.

10. Verfahren nach einem der Ansprüche 7 bis 9, dadurch gekennzeichnet, daß man eine Futterbremse (30) mit vorgebohrten Ausnehmungen verwendet sowie ein Flacheisen (32) für die Befestigung der Futterbremse (30), welches ebenfalls vorgebohrte Ausnehmungen für die Befestigungsorgane aufweist.

11. Futterschalenbauteil für die Durchführung des Verfahrens nach einem der Ansprüche 6—10, gekennzeichnet durch eine Vielzahl von eingegossenen Befestigungsorganen (26) oder von Ausnehmungen (24) für die Aufnahme von Befestigungsorganen (26) für eine Futterbremse.

**Revendications**

1. Ensemble pour la réalisation d'une mangeoire comprenant plusieurs éléments de construction préfabriqués en forme d'auges (14), aptes à être posés sous la forme d'une rangée, ainsi qu'un élément d'arrêt arrière flexible (30) pour la nourriture, qui peut être solidarisé à l'aide d'une série d'organes de fixation (26), caractérisé en ce que les éléments de construction préfabriqués en forme d'auges (14) comportent chacun plusieurs organes de fixation (26) ou plusieurs évidements (24) pour la réception des organes de fixation (26).

2. Ensemble pour la réalisation d'une mangeoire selon la revendication 1, caractérisé en ce que les organes de fixation (26) s'enfoncent, par une extrémité arrière libre, dans un lit de béton (12) formé sur place pour les auges (16) et fait saillie à l'extérieur des auges (16) par une partie avant filetée.

3. Ensemble pour la réalisation d'une mangeoire selon la revendication 2, caractérisé en ce que les parties arrière des organes de fixation (26) pénètrent dans le lit de béton (12) formé sur place, en s'inclinant vers le bas, tandis que les parties avant filetées font saillie, suivant une direction horizontale, hors des auges (16).

4. Ensemble pour la réalisation d'une mangeoire selon l'une des revendications 1 à 3, caractérisé en ce que les organes de fixation (26) sont intégrés dans les auges (16).

5. Ensemble pour la réalisation d'une mangeoire selon l'une des revendications 1 à 4, caractérisé en ce que l'élément d'arrêt (30) est serré entre les auges (16) et une ferrure plate (32) par les organes de fixation (26) et en ce que les intervalles entre les organes de fixation (26) ou entre les évidements (24) destinés aux organes de fixation (26) des éléments de construction en forme d'auges (16), correspondent aux intervalles entre des passages percés à l'avance dans l'élément d'arrêt (30) ainsi qu'aux intervalles entre des passages percés à l'avance dans la ferrure plate (32).

6. Ensemble pour la réalisation d'une mangeoire selon la revendication 5, caractérisé en ce que la position du bord supérieur de la ferrure plate (32) correspond sensiblement à la position du bord supérieur de la partie adjacente de l'élément de construction en forme d'auges (16).

7. Procédé pour réaliser une mangeoire, selon lequel des éléments de construction préfabriqués en forme d'auges (14) sont posés dans un lit en béton (12) formé sur place, caractérisé en ce que l'on pose des éléments de construction préfabriqués en forme d'auges (14), dont la bordure arrière est pourvue d'organes de fixation (26) en vue de la fixation d'un élément d'arrêt (30) pour la nourriture ou est pourvue d'évidements pour la réception de ces organes de fixation (26).

8. Procédé selon la revendication 7, caractérisé en ce que, lors de la pose des éléments de construction en forme d'auges (14), les extrémités arrière des organes de fixation (26) sont enchâssées dans le lit de béton (12) formé sur place.

9. Procédé selon l'une des revendications 7 ou 8, caractérisé en ce qu'on utilise comme organe de fixation, des vis de fixation (26) qui sont orientées suivant une certaine inclinaison par rapport à l'horizontale et en ce que les parties libres filetées de ces vis sont, après la pose des éléments de construction en forme d'auges (14), pliées pour être amenées à l'horizontale.

10. Procédé selon l'une des revendications 7 à 9, caractérisé en ce que l'on utilise un élément d'arrêt (30) pourvu d'évidements percés à l'avance ainsi qu'une ferrure plate (32) pour la fixation de l'élément d'arrêt (30), ferrure qui présente également des évidements percés à l'avance pour les organes de fixation.

11. Eléments de construction en forme d'auge pour la mise en oeuvre du procédé selon l'une des revendications 6 à 10, caractérisé par plusieurs organes de fixation intégrés (26) ou plusieurs évidements (24) pour la réception d'organes de fixation (26), destinés à un élément d'arrêt pour la nourriture.

**Claims**

1. Feeding trough device with a plurality of pre-fabricated feeding tray members (14) which may lay side by side in a series arrangement and with a flexible rearward feed barrier (30) attachable by means of a plurality of attachment elements (26), characterized in that the pre-fabricated feeding tray members (14) each comprise several attachment elements (26) or several throughholes (24) for receiving the attachment elements (26).

2. Feeding trough device according to claim 1, characterized in that the attachment elements (26) reach with a rearward free end into a concrete bed (12) for the feeding trays (16) while a front threaded section extends outside the feeding tray (16).

3. Feeding trough device according to claim 2, characterized in that the rearward section of the attachment elements (26) extends in a slanted orientation downward into the concrete bed (12) while the threaded front section extends horizontally out of the feeding tray (16).

4. Feeding trough device according to one of claims 1 to 3, characterized in that the attachment elements (26) are cast into the feeding trays (16).

5. Feeding trough device according to one of claims 1 to 4, characterized in that the feed barrier (30) is clamped between the feeding trays (16) and a flat steel bar (32) by means of the attachment elements (26) and that the distances of the attachment elements (26) or of the throughholes (24) of the feeding trays (16) for receiving the attachment elements (26) correspond to the distances of the previously prepared throughholes of the feed barrier (30) as well as to the distances of the previously prepared throughholes of the flat steel bar (32).

6. Feeding trough device according to claim 5, characterized in that the upper edge of the flat steel bar (32) coincides approximately with the upper edge of the corresponding section of the feed tray element (16).

7. A process for producing a feed trough device, said process comprising the placing of pre-fabricated feeding tray members (14) in a concrete bed (12), characterized in that pre-fabricated feeding tray members (14) are placed, which have at their rearward rim section several attachment elements (26) for the attachment of feed barrier (30) or several throughholes for receiving the attachment elements (26).

8. Process according to claim 7, characterized in that in the course of placing the feeding tray members (14) the rearward ends of the attachment elements (26) are embedded into the concrete bed (12).

9. Process according to one of claims 7 or 8, characterized in that as said attachment elements attachment bolts (26) are used, which are positioned with a slant to the horizontal plane and the free threaded sections thereof are bent to the horizontal direction after placing the feeding tray elements (14).

10. Process according to one of claims 7 to 9, characterized in that a feed barrier (30) having previously prepared throughholes is used as well as a flat steel bar (32) for the attachment of the feed barrier (30) which also has previously prepared throughholes for receiving the attachment elements.

11. A feeding tray member for working the process according to one of claims 6 to 10, characterized by a plurality of embedded attachment elements (26) or a plurality of throughholes (24) for receiving attachment elements (26) for attaching a feed barrier.

0 071 832